# FASCICULE DE BREVET EUROPEEN

(11) **EP 1 483 158 B1**
(45) Date de publication et mention de la délivrance du brevet: **22.07.2009**
(21) Numéro de dépôt: 03727572.4
(22) Date de dépôt: 06.03.2003
(51) Int. Cl.: B65D 1/02

(54) **RÉCIPIENT EN MATIERE THERMOPLASTIQUE POUR PRODUIT DEVANT ETRE PROTEGÉ DE LA LUMIERE**
BEHÄLTER AUS THERMOPLASTISCHEM MATERIAL FÜR VOR LICHT ZU SCHÜTZENDEN PRODUKTE
CONTAINER MADE FROM THERMOPLASTIC MATERIAL FOR A PRODUCT TO BE PROTECTED FROM LIGHT

(30) Priorité: 08.03.2002 FR 0202956
(43) Date de publication de la demande: 08.12.2004
(73) Titulaire: SIDEL PARTICIPATIONS, 76930 Octeville-sur-Mer (FR)
(72) Inventeur: ADRIANSENS, Eric, C/o Sidel, F-76930 Octeville Sur Mer (FR); VASSENEIX, Alain, C/o SIDEL, F-76930 Octeville sur Mer (FR); LETERC, François, c/o SIDEL, F-76930 Octeville Sur Mer (FR); DAULMERIE, Sophie, c/o SIDEL, F-76930 Octeville Sur Mer (FR)
(74) Mandataire: Gorrée, Jean-Michel
(86) Numéro de dépôt international: PCT/FR2003/000717
(87) Numéro de publication internationale: WO 2003/076277

(56) Documents cités:
- US-A- 3 784 661
- DATABASE WPI Section Ch, Week 200029 Derwent Publications Ltd., London, GB; Class A32, AN 1992-370521 XP002221745 -& JP 03 042796 B (DAINIPPON PRINTING CO LTD), 22 mai 2000 (2000-05-22)
- PATENT ABSTRACTS OF JAPAN vol. 010, no. 040 (M-454), 18 février 1986 (1986-02-18) & JP 60 193630 A (SUMIKA KARAA KK;OTHERS: 01), 2 octobre 1985 (1985-10-02)
- PATENT ABSTRACTS OF JAPAN vol. 1998, no. 01, 30 janvier 1998 (1998-01-30) & JP 09 239814 A (MINORU KASEI KK), 16 septembre 1997 (1997-09-16)
- PATENT ABSTRACTS OF JAPAN vol. 1996, no. 07, 31 juillet 1996 (1996-07-31) & JP 08 080928 A (TOYO SEIKAN KAISHA LTD), 26 mars 1996 (1996-03-26)

## Description

La présente invention concerne des perfectionnements apportés aux récipients tels que bouteille, flacon, bidon ou analogue, destinés à contenir des produits devant être protégés de la lumière, ces récipients étant constitués en une matière thermoplastique et étant fabriqués par soufflage ou étirage-soufflage d'une préforme.

Certains produits sont altérés sous l'action de la lumière.

C'est le cas, en particulier, du lait, dont le goût se transforme sous l'effet de la lumière, qu'il s'agisse de lumière naturelle ou, bien qu'à une moindre échelle, de lumière artificielle.

Ce goût altéré, dit "goût lumière", se développe en deux sensations :
- un goût "activé" (goût de chou, goût de cuit ou goût de champignon) qui apparaît très rapidement,
- un goût d'oxydation (goût de carton, de papier, de métal, huileux) qui se développe plus lentement.

Ces mauvais goûts sont engendrés par plusieurs phénomènes :
- une dégradation des acides aminés et des protéines, avec notamment une dégradation de la méthionine, qui est la principale cause du goût "activé" ;
- une transformation de vitamines, notamment une perte importante en vitamines hydrosolubles - par exemple la riboflavine qui est une des causes du goût "activé" -, et une dégradation de vitamines liposolubles - par exemple du rétinyl palmitate (vitamine A) pour des longueurs d'onde inférieures à 450 nm - ;
- une oxydation des acides gras insaturés, qui est la principale cause du goût oxydé.

L'influence de la lumière varie également en fonction du traitement auquel le lait a été soumis.

Finalement, l'apparition du mauvais goût lumière dans le lait est fonction de plusieurs paramètres :
- la quantité de lumière (intensité lumineuse et durée d'exposition) reçue par le lait,
- les longueurs d'onde des rayonnements,
- la sensibilité du produit lui-même,
- la température.

En particulier, il semble que le goût lumière soit causé essentiellement par des rayonnements ayant des longueurs d'onde inférieures à 550 nm, dans plusieurs fenêtres du spectre visible et ultraviolet. La Fédération Internationale du Lait recommande par conséquent la mise en oeuvre d'emballages n'autorisant que 2 % de transmission de lumière à 400 nm et 8 % à 500 nm.

Enfin, l'épaisseur du matériau ainsi que le rapport volume/surface de l'emballage influencent également l'apparition du mauvais goût.

D'après les explications qui précèdent, on comprend fort bien que la durée de conservation du lait ou de produits laitiers pourra être d'autant plus longue que la protection contre la lumière sera plus efficace.

Des essais ont été tentés avec des bouteilles teintées. Il en est résulté une meilleure conservation du lait qu'avec des bouteilles transparentes ou translucides, mais il ne s'est pas avéré possible d'assurer une bonne conservation du lait dans les conditions requises.

La solution qui est très largement exploitée pour la commercialisation des laits longue conservation consiste à fabriquer un récipient multicouches, formé d'au moins trois couches minces en matières thermoplastiques (par exemple en PEHD) adhérant l'une à l'autre, au moins l'une des couches internes étant chargée de pigments la rendant opaque à la lumière (couche interne de couleur noire dans les bouteilles de lait à longue durée de conservation). La durée de conservation peut alors atteindre les conditions requises du marché. La même solution peut être appliquée au PET : toutefois dans ce cas la fabrication de la préforme initiale est substantiellement compliquée et coûteuse ; par ailleurs, il peut se produire ultérieurement un décollement des couches.

D'une façon générale, les solutions connues, actuellement utilisées ou envisageables, sont complexes à mettre en oeuvre, et sont onéreuses et très complexes dans le cas du PET.

Il existe donc, de la part des utilisateurs (fabricants de récipients, conditionneurs), une demande pressante pour disposer de récipients en matière thermoplastique - tel que le polyéthylène téréphtalate PET, le polyéthylène naphtalate PEN, le polyéthylène haute densité PEHD - qui protège efficacement le produit contre l'effet de la lumière, mais qui soient d'une fabrication plus simple et qui soient d'un coût plus faible que les récipients correspondants actuellement disponibles.

A ces fins, l'invention propose un récipient tel que mentionné au préambule qui se **caractérise en ce qu**'il comprend une couche en matière thermoplastique chargée de façon homogène de paillettes de mica à raison de 2 à 4 % en poids avec addition d'oxyde de titane en poudre à raison de 2 à 4 % en poids.

Selon un mode de réalisation préféré de l'invention, le récipient est constitué d'une monocouche en matière plastique chargée formant la susdite couche, qui conduit à un processus de fabrication plus simple et moins coûteux du récipient. Cependant, au moins pour certaines applications, l'invention n'écarte pas le mode de réalisation consistant en ce que le récipient est revêtu extérieurement d'un manchon qui l'enserre étroitement et qui est constitué en matière thermoplastique chargée constituant la susdite couche.

Grâce aux dispositions conformes à l'invention, un effet de barrière à la lumière est conféré, dans une certaine mesure, par les pigments de mica seuls et, dans une moindre mesure, par la poudre d'oxyde de titane seule. Par contre, un effet particulièrement efficace est procuré par la combinaison des pigments de mica et de la poudre d'oxyde de titane. Cet effet barrière à la lumière se présente notamment pour les longueurs d'ondes inférieures à environ 550 nm, c'est-à-dire précisément pour les rayonnements qui sont les plus actifs dans le processus de dégradation du lait.

Du fait que l'effet barrière à la lumière est conféré par l'ensemble des micro-paillettes de mica qui sont dispersées au sein de la matière thermoplastique et qui forment un obstacle matériel à la propagation de la lumière, il est nécessaire que ces micro-paillettes soient en nombre suffisant pour être en mesure de former un obstacle continu propre à procurer l'effet recherché.

Toutefois, a contrario, la présence des micro-paillettes de mica (lequel est un isolant thermique) peut gêner le réchauffage de la masse de matière thermoplastique lors de la fabrication de ladite couche. Aussi dans le cas où le récipient est constitué d'une monocouche, il est indispensable que la préforme puisse être chauffée correctement en préalable à l'étape de soufflage ou d'étirage-soufflage, et en outre il est nécessaire que la charge de micro-paillettes de mica soit présente dans une proportion n'entravant pas le déroulement correct du processus de soufflage ou d'étirage-soufflage lors de la fabrication du récipient.

De la même manière, une proportion excessive de poudre d'oxyde de titane doit être évitée en raison de l'épaississement de la pâte plastique réchauffée et de la gêne qui en résulte en cours de fabrication du récipient.

Une proportion n'excédant pas environ 8 % en poids, pour l'ensemble des deux additifs, semble devoir répondre de façon satisfaisante à ces objectifs contradictoires.

Enfin, aussi bien les pigments de mica que l'oxyde de titane sont des produits qu'il est souhaitable de n'introduire qu'à dose minimale dans la matière thermoplastique afin de ne pas modifier les caractéristiques mécaniques du récipient pour sa fabrication et pour son utilisation. Pour satisfaire à cette exigence tout en respectant les contraintes mentionnées plus haut destinées à ne pas perturber le processus de fabrication du récipient, on prévoit de préférence que le mica soit présent pour environ 2 à 4 % en poids et l'oxyde de titane pour environ 2 à 4 % en poids dans des proportions respectives telles que l'ensemble soit limité à environ 4 % en poids. Typiquement les résultats souhaités peuvent être obtenus en prévoyant que le mica soit présent pour environ 2 % en poids et l'oxyde de titane pour environ 2 % en poids.

De façon plus spécifique, l'effet barrière à la lumière est optimum si les micro-paillettes de mica sont toutes disposées parallèlement les unes aux autres avec recouvrements partiels et parallèlement à la surface de la paroi du récipient (disposition en tuiles de toit) : on est ainsi assuré qu'il n'existe pas de trajectoires rectilignes, à travers l'épaisseur de la paroi du récipient, le long desquelles la lumière peut parvenir au produit contenu dans le récipient.

Notamment dans le cas d'un récipient monocouche, le positionnement requis des micro-paillettes de mica est obtenu, naturellement, au cours du processus de soufflage ou d'étirage-soufflage que l'on fait subir à la préforme en matière thermoplastique pour aboutir au récipient final à molécules biorientées : le double étirage (axial et radial) conduisant à une biorientation provoque conjointement une orientation des micro-paillettes dans l'agencement requis en tuiles de toit, sans qu'il soit besoin de prévoir une étape de traitement additionnelle à cette fin.

Les dispositions conformes à l'invention trouvent une application préférée pour la fabrication de récipients dont la couche barrière à la lumière est obtenue à partir d'une matière thermoplastique choisie parmi le polyéthylène téréphtalate PET, le polyéthylène naphtalate PEN et le polyéthylène haute densité PEHD.

Comme cela résulte déjà des explications qui précèdent, l'invention vise l'application tout particulièrement intéressante, bien que non exclusive et non limitative, des bouteilles de lait formées d'une monocouche en PET chargé de paillettes de mica et de poudre d'oxyde de titane formant barrière à la lumière, qui permet la conservation des laits pendant une durée suffisante, sans altération du goût des laits. Typiquement, une bouteille formée d'une monocouche en PET chargé avec 2 % en poids de mica et 2 % en poids d'oxyde de titane permet une conservation des laits longue conservation pendant une durée supérieure aux trois mois requis par la législation dans des conditions de stockage moyen.

Comme cela résulte également des explications qui précèdent, l'invention n'est cependant pas limitée au domaine de la conservation du lait ou des produits laitiers, et elle peut trouver application pour la conservation d'autres produits sensibles à la lumière, comme par exemple les huiles, et notamment l'huile d'olive, ou bien encore la bière.

## Revendications

1. Récipient tel que bouteille, flacon, bidon ou analogue, destiné à contenir un produit devant être protégé de la lumière, ce récipient étant constitué en une matière thermoplastique et étant fabriqué par soufflage ou étirage-soufflage d'une préforme,
**caractérisé en ce que** ledit récipient comprend une couche en matière thermoplastique chargée de façon homogène de paillettes de mica à raison de 2 à 4 % en poids avec addition d'oxyde de titane en poudre à raison de 2 à 4 % en poids.

2. Récipient selon la revendication 1, **caractérisé en ce qu'**il est constitué d'une monocouche en matière plastique chargée formant la susdite couche.

3. Récipient selon la revendication 1, **caractérisé en ce qu'**il est revêtu extérieurement d'un manchon qui l'enserre étroitement et qui est constitué en matière thermoplastique chargée constituant la susdite couche.

4. Récipient selon l'une quelconque des revendications 1 à 3, **caractérisé en ce que** le mica est présent pour environ 2 à 4 % en poids et l'oxyde de titane pour environ 2 à 4 % en poids dans des proportions respectives telles que l'ensemble soit d'environ 4 % en poids.

5. Récipient selon la revendication 4, **caractérisé en ce que** le mica est présent pour environ 2 % en poids et l'oxyde de titane pour environ 2 % en poids.

6. Récipient selon l'une quelconque des revendications 1 à 5, **caractérisé en ce que** la matière thermoplastique est choisie parmi le polyéthylène téréphtalate PET, le polyéthylène naphtalate PEN et le polyéthylène haute densité PEHD.

7. Bouteille de lait, **caractérisée en ce qu'**elle est constituée selon l'une quelconque des revendications 1 à 6.

## Claims

1. A container, such a bottle, flask, can or the like, intended to contain a product that needs to be protected from the light, this container being made of a thermoplastic and manufactured by blow-molding or stretch-blow-molding a preform,
**characterized in that** said container comprises a layer of thermoplastic homogenously filled with mica flakes to a level of 2 to 4% by weight with the addition of powdered titanium oxide to a level of 2 to 4% by weight.

2. The container as claimed in claim 1, **characterized in that** it consists of a monolayer of filled plastics material forming said layer.

3. The container as claimed in claim 1, **characterized in that** it is externally coated with a sleeve which grips it closely and is made of a filled thermoplastic constituting said layer.

4. The container as claimed in any one of claims 1 to 3, **characterized in that** the mica is present to a level of about 2 to 4% by weight and the titanium oxide to a level of about 2 to 4% by weight in respective proportions such that the combination represents about 4% by weight.

5. The container as claimed in claim 4, **characterized in that** the mica is present at a level of about 2% by weight and the titanium oxide is present at a level of about 2% by weight.

6. The container as claimed in any one of claims 1 to 5, **characterized in that** the thermoplastic is chosen from polyethylene terephthalate PET, polyethylene naphthalate PEN and high density polyethylene HDPE.

7. A milk bottle, **characterized in that** it is formed as claimed in any one of claims 1 to 6.

## Patentansprüche

1. Behältnis, wie z.B. eine Flasche, ein Flakon oder ein Kanister oder ähnliches, dazu gedacht, ein vor Licht zu schützendes Erzeugnis zu enthalten, wobei dieses Behältis aus einem thermoplastischen Material gemacht ist und durch Blasverfahren oder Zieh-Blasverfahren aus einem Vorformling hergestellt wird, **dadurch gekennzeichnet, dass** das Behältnis eine Schicht eines thermoplastischen Materials umfasst, das homogen mit 2 bis 4 Gew.% Glimmerplättchen mit der Zugabe von 2 bis 4 Gew.% pulverförmigem Titaniumoxid gefüllt ist.

2. Behältnis gemäß Anspruch 1, **dadurch gekennzeichnet, dass** es aus einer Monoschicht eines gefüllten Plastikmaterials besteht, welches die besagte Schicht bildet.

3. Behältnis gemäß Anspruch 1, **dadurch gekennzeichnet, dass** es äußerlich mit einer Manschette beschichtet ist, welche es fest umschließt und aus einem gefüllten thermoplastischen Material besteht, welches die besagte Schicht bildet.

4. Behältnis gemäß einem der Ansprüche 1 bis 3, **dadurch gekennzeichnet, dass** der Glimmer in ungefähr 2 bis 4 Gew.% und das Titaniumoxid in ungefähr 2 bis 4 Gew.% in einem relativen Verhältnis enthalten sind, dass die Kombination ungefähr 4 Gew.% ist.

5. Behältnis gemäß Anspruch 4, **dadurch gekennzeichnet, dass** der Glimmer in ungefähr 2 Gew.% enthalten ist und das Titaniumoxid in ungefähr 2 Gew.%.

6. Behältnis gemäß irgendeinem der Ansprüche 1 bis 5, **dadurch gekennzeichnet, dass** das thermoplastische Material ausgewählt ist aus Polyethylenterephthalat PET, Polyethylennaphthalat PEN und Polyethylen hoher Dichte HDPE.

7. Milchflasche, **dadurch gekennzeichnet, dass** sie gemäß irgendeinem der Ansprüche 1 bis 6 aufgebaut ist.
